# EUROPÄISCHE PATENTSCHRIFT

(11) **EP 0 684 167 B1**
(45) Veröffentlichungstag und Bekanntmachung des Hinweises auf die Patenterteilung: **20.08.1997**
(21) Anmeldenummer: 95108087.8
(22) Anmeldetag: 26.05.1995
(51) Int. Cl.: B60R 21/20, B60R 21/28

(54) **Insassen-Rückhaltesystem für die Fahrerseite in einem Fahrzeug**
Occupant restraint system for the driver side in a vehicle
Système de retenue d'un occupant pour le côté conducteur dans un véhicule

(30) Priorität: 27.05.1994 DE 4418628
(43) Veröffentlichungstag der Anmeldung: 29.11.1995
(73) Patentinhaber: TRW Occupant Restraint Systems GmbH, 73553 Alfdorf (DE)
(72) Erfinder: Eyrainer, Heinz, D-73550 Waldstetten (DE)
(74) Vertreter: Degwert, Hartmut, Dipl.-Phys.

(56) Entgegenhaltungen:
- EP-A- 0 615 889
- FR-A- 2 061 717
- GB-A- 1 367 132
- US-A- 3 801 123

## Beschreibung

Die Erfindung betrifft ein Insassen-Rückhaltesystem für die Fahrerseite in einem Fahrzeug, mit einem in das Lenkrad integrierten Gassack und einem Knie-Aufprallschutz.

Ein Rückhaltesystem mit den Merkmalen des Oberbegriffs des Anspruchs 1 ist aus der GB-A-1 367 132 bekannt.

Dieses Rückhaltesystem ist besonders, wenn auch nicht ausschließlich, für den Einsatz in Ländern ohne Gurtanlegepflicht bestimmt. Bei nicht angelegtem Sicherheitsgurt muß der Knie-Aufprallschutz die Rückhaltefunktion für den Unterkörper des Insassen übernehmen.

Der Knie-Aufprallschutz wird gewöhnlich durch eine in die Instrumententafel integrierte Prallplatte gewährleistet, die beim Aufprall ein vordefiniertes Deformationsverhalten aufweist.

Der in das Lenkrad integrierte Gassack wird gewöhnlich durch einen ebenfalls in der Lenkradnabe untergebrachten Gasgenerator aufgeblasen. Die gemeinsame Unterbringung von gefaltetem Gassack und Gasgenerator in der Nabe des Lenkrades führt wegen des beträchtlichen Bauvolumens zu Kompromissen bei der Gestaltung des Lenkrades. Durch den Gasgenerator wird auch die Masse des Lenkrades beträchtlich erhöht, wodurch die Neigung der Lenksäule zur Schwingungsanregung erhöht wird.

Der Knie-Aufprallschutz nimmt wegen seines permanent vorhandenen Deformations-Volumens einen relativ großen Raum in der Instrumententafel in Anspruch. Auch trägt die Masse der Deformationselemente nicht unerheblich zum Fahrzeuggewicht bei.

Schließlich ist auch die Rückhaltefunktion eines solchen Systems nicht optimal, weil aus Komfort- und Gestaltungsgründen der Knie-Aufprallschutz relativ weit vom Insassen entfernt ist. Dadurch ergibt sich eine hohe Aufprallgeschwindigkeit der Knie bei entsprechend hoher Aufprallenergie.

Durch die Erfindung wird ein Insassen-Rückhaltesystem für die Fahrerseite in einem Fahrzeug bereitgestellt, das trotz erheblicher Volumen- und Masseneinsparung im Bereich des Lenkrades und des Knie-Aufprallschutzes eine verbesserte Rückhaltefunktion aufweist. Gemäß der Erfindung ist das Lenkrad an einer rohrförmigen Lenkspindel befestigt, in deren Innerem ein Gasgenerator angeordnet ist. Der durch die Lenkspindel gebildete Strömungskanal mündet in den im Lenkrad gefalteten Gassack ein. Der Knie-Aufprallschutz umfaßt ein Gaskissen, das über eine Strömungsverbindung mit dem Inneren der hohlen Lenkspindel aufblasbar ist. Das erfindungsgemäße Insassen-Rückhaltesystem beinhaltet somit einen aktiven Knieschutz auf der Fahrerseite. Die bei dem herkömmlichen Knie-Aufprallschutz erforderlichen Deformationselemente können daher entfallen. Der in der hohlen Lenkspindel angeordnete Gasgenerator kann sowohl den Gassack am Lenkrad als auch das Gaskissen des Knie-Aufprallschutzes aufblasen. Da das Gaskissen näher am Gasgenerator angeordnet ist und ein kleineres Volumen aufweist als der Gassack im Lenkrad, wird das Gaskissen früher als der Gassack aufgeblasen. Dieses Verhalten entspricht aber dem zeitlichen Ablauf des Rückhaltevorgangs, da durch den bei der Erfindung vorgesehenen aktiven Knieschutz die Rückhaltung der Knie deutlich früher eintritt als die des Oberkörpers. Das Gaskissen entfaltet sich in Richtung der Knie des Fahrers und ermöglicht somit eine sehr frühzeitige und effektive Becken-Rückhaltung. Zudem werden die Knie des Insassen durch den relativ weichen Aufprall im Gaskissen geschont, auch wenn dieser mit einer - allerdings relativ weichen und nachgiebigen - Prallplatte abgedeckt ist.

Durch die sehr frühe Rückhaltung des Beckenbereiches wird zudem eine frühzeitige Rotationsbewegung des Oberkörpers erreicht. So ergibt sich eine günstige, weitgehend axiale Einleitung der Insassenenergie auf Lenkrad und Lenksäule.

Bei der bevorzugten Ausführungsform besteht zwischen dem aufgeblasenen Gaskissen des Knie-Aufprallschutzes und dem Inneren des Gassacks eine Strömungsverbindung, wodurch eine besonders vorteilhafte Wechselwirkung zwischen den beiden Schutzeinrichtungen erzielt wird. Wenn die Knie des Fahrzeuginsassen etwa 40 ms nach Fahrzeugaufprall in das Gaskissen eintauchen, wird das aus diesem verdrängte Gas dem Gassack am Lenkrad zugeführt, der dann nach etwa 60 ms die Rückhaltefunktion für den Oberkörper gewährleistet. Durch den Strömungswiderstand der Strömungsverbindung kann die Gas- und Druckverteilung zwischen Gaskissen und Gassack beeinflußt und optimal eingestellt werden. Die für das Gaskissen vom Gasgenerator bereitgestellte Gasmenge geht nach dem Auftreffen der Knie des Fahrzeuginsassen nicht durch Abströmen in den Fahrzeugraum verloren, sondern trägt zur Füllung des Gassacks am Lenkrad bei. Der Gasgenerator muß daher kaum größer dimensiniert werden als für einen herkömmlichen Lenkrad-Gassack.

Gemäß einer vorteilhaften Weiterbildung besteht die Strömungsverbindung zwischen Gaskissen und Gassack nur in Richtung von ersterem zu letzterem, damit bei der Rückhaltung des Oberkörpers keine Rückverlagerung des Gases in das Gaskissen erfolgt, nachdem dieses seine Rückhaltefunktion bereits erfüllt hat.

Gemäß einer alternativen Ausführung sind zwei getrennt aktivierbare Gasgeneratoren vorgesehen, die beide in der rohrförmigen Lenkspindel untergebracht werden. Die Aktivierung des dem Gaskissen des Knie-Aufprallschutzes zugeordneten Gasgenerators erfolgt nur bei nicht angelegtem Sicherheitsgurt. Da sich bei angelegtem Sicherheitsgurt ein Knie-Aufprallschutz erübrigt, können nach einem Unfall die Folgekosten für die Erneuerung des aktiven Knieschutzsystems eingespart werden.

Weitere Merkmale und Vorteile der Erfindung ergeben sich aus der folgenden Beschreibung und aus der Zeichnung, auf die Bezug genommen wird. In der Zeichnung zeigen:
- Fig. 1: schematisch ein erfindungsgemäßes Insassen-Rückhaltesystem für die Fahrerseite;
- Fig. 2: eine axiale Schnittansicht einer ersten Ausführungsform des Rückhaltesystems im Ruhezustand;
- Fig. 3: das in Fig. 2 gezeigte Rückhaltesystem im aktivierten Zustand;
- Fig. 4: eine axiale Schnittansicht einer bevorzugten Ausführungsform des Rückhaltesystems im aktivierten Zustand; und
- Fig. 5: eine axiale Schnittansicht einer weiteren Ausführungsform des Rückhaltesystems.

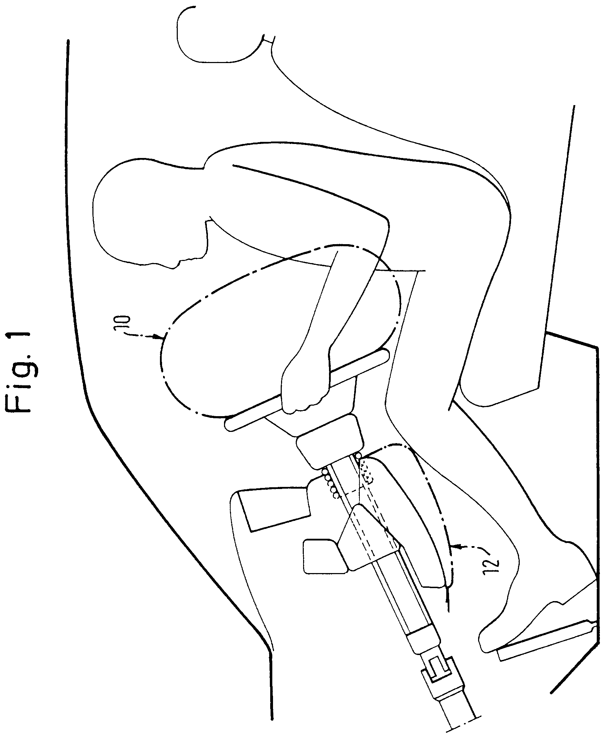

Bei dem in Fig. 1 gezeigten Insassen-Rückhaltesystem für die Fahrerseite in einem Fahrzeug ist ein aktiver Knie-Aufprallschutz mit einem Lenkrad-Gassack kombiniert. Strichpunktiert ist in Fig. 1 der mit 10 bezeichnete Gassack im aufgeblasenen Zustand dargestellt; mit 12 ist der Knie-Aufprallschutz bezeichnet, dessen aktivierter Zustand gleichfalls strichpunktiert eingezeichnet ist. Im aktivierten Zustand des Knie-Aufprallschutzes 12 befindet sich dieser in geringer Entfernung vor dem Knie des Insassen. Im Ruhezustand hingegen nimmt er an der Unterseite der Armaturentafel nicht mehr Raum ein als eine übliche Verkleidung, die keine Rückhaltefunktion aufweist.

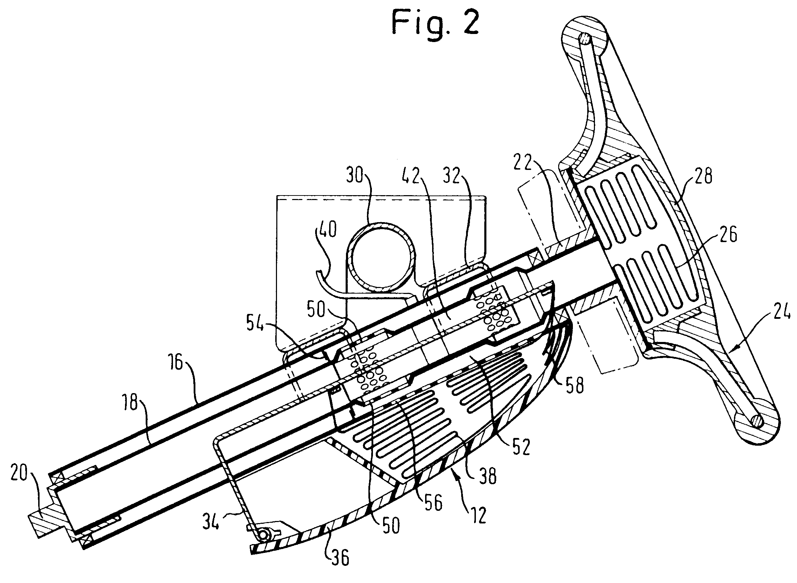

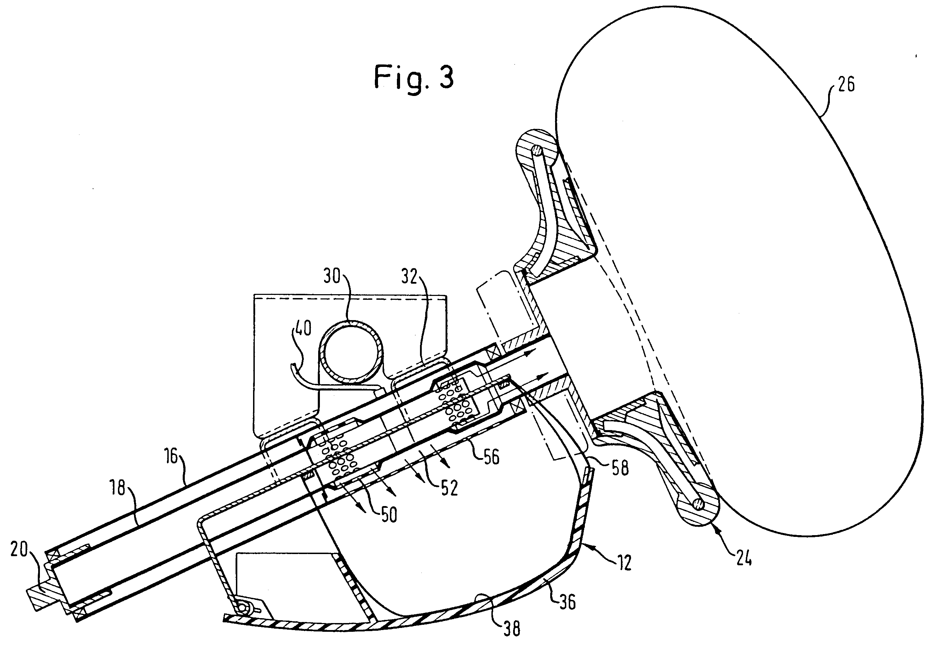

Einzelheiten des Rückhaltesystems werden nun anhand der Fig. 2 bis 5 näher erläutert.

In einem am Fahrzeugaufbau abgestützten Lenksäulenrohr 16 ist eine rohrförmige Lenkspindel 18 aufgenommen und drehbar gelagert. An das untere Ende der rohrförmigen Lenkspindel 18 ist eine Lenkwelle 20 drehfest angeschlossen. Auf das obere, aus der Lenkrohrsäule 16 herausragende Ende der hohlen Lenkspindel 18 ist eine Anschlußbuchse 22 eines allgemein mit 24 bezeichneten Lenkrades drehfest aufgesetzt. Das Lenkrad 24 besitzt eine topfförmige Nabe, in deren Innenraum ein Gassack 26 gefaltet untergebracht ist. Der gefaltete Gassack 26 ist durch eine Abdeckung 28, in der innenseitig eine Aufbruchlinie definiert ist, nach außen abgedeckt.

Der Knie-Aufprallschutz 12 ist über einen Querträger 30 des Fahrzeugs, eine an diesem befestigte Konsole 32 und eine daran befestigte Stützstruktur 34 am Fahrzeugaufbau abgestützt. Er umfaßt eine gelenkig an der Stützstruktur 34 angeschlossene Prallplatte 36, die eine Abdeckung für ein zusammengefaltetes Gaskissen 38 bildet.

Im Inneren der rohrförmigen Lenkspindel 18 ist ein elektrisch über eine Leitung 40 aktivierbarer pyrotechnischer Gasgenerator 42 angeordnet. Der Gasgenerator 42 ist rohrförmig und besitzt an seinen beiden axialen Enden eine Vielzahl von Ausströmöffnungen, die über seinen Umfang verteilt sind. Den Ausströmöffnungen gegenüberliegend ist die Wandung der Lenkspindel 18 aufgeweitet, so daß ein Ringspalt um den Gasgenerator 42 entsteht, durch den die aus diesem austretenden Gase strömen. Auf der dem Lenkrad 24 zugewandten Seite des Gasgenerators 42 besteht durch den hohlen Innenraum der Lenkspindel 18 eine unmittelbare Strömungsverbindung mit dem Innenraum des Gassacks 26. Am gegenüberliegenden Ende des Gasgenerators 42 ist in der aufgeweiteten Mantelfläche der Lenkspindel 18 eine Vielzahl von Gasdurchtrittsöffnungen 50 angebracht, durch die das von dem Gasgenerator freigesetzte Gas in einen Ringraum 52 eintreten kann, der die Lenkspindel 18 im Bereich des Gasgenerators 42 umgibt und nach außen durch die Wandung des Lenksäulenrohres 16 sowie nach unten durch eine radiale Trennwand 54 begrenzt ist. Das Lenksäulenrohr 18 ist auf seiner dem gefalteten Gaskissen 38 zugewandten Seite mit einer Vielzahl von Gasdurchtrittsöffnungen 56 versehen, die unmittelbar in das Innere des Gaskissens 38 münden.

Bei Aktivierung des Gasgenerators 42 treten die von diesem freigesetzten Gase über die Durchtrittsöffnungen 50 zunächst in den Ringraum 52 und dann durch die Durchtrittsöffnungen 56 in der Lenkrohrsäule 16 in das Innere des Gaskissens 38 ein, das sich nun entfaltet und die Prallplatte 36 nach außen drückt, so daß sie um ihre Abstützung an der Stützstruktur 13 verschwenkt wird, bis ihre Öffnungsbewegung durch Fangbänder 58 begrenzt wird. Gleichzeitig erfolgt die Befüllung des Gassacks 26 unmittelbar über den durch die Lenkspindel 18 gebildeten Strömungskanal. Wegen seines größeren Volumens und der größeren Entfernung zum Gasgenerator 42 wird aber der Gassack 26 später aufgeblasen als das Gaskissen 38. Im praktischen Versuch zeigt sich, daß das Gaskissen 38 nach etwa 40 ms aufgeblasen ist, während der Gassack 26 nach etwa 60 ms aufgeblasen ist. Dies entspricht dem gewünschten Ablauf der Rückhaltefunktion: Die Knierückhaltung beginnt nach etwa 45 ms und endet bei etwa 70 ms, während die Rückhaltung des Oberkörpers nach etwa 60 ms beginnt und nach etwa 90 ms endet.

Die Prallplatte 36 kann relativ leicht, weich und nachgiebig ausgebildet sein, da sie keine wesentliche Verformungsarbeit verrichten muß. Hinsichtlich der Gestaltung des Lenkrades 24 besteht große Freiheit, da im Inneren der Lenkradnabe lediglich der gefaltete Gassack 26 aufgenommen werden muß, wozu ein relativ geringes Volumen ausreicht. Durch die Verlagerung des Gasgenerators 42 in die hohle Lenkspindel 18 wird aber auch das Gewicht des Lenkrades insgesamt reduziert, wodurch einer Neigung zur Schwingungserregung vorgebeugt wird.

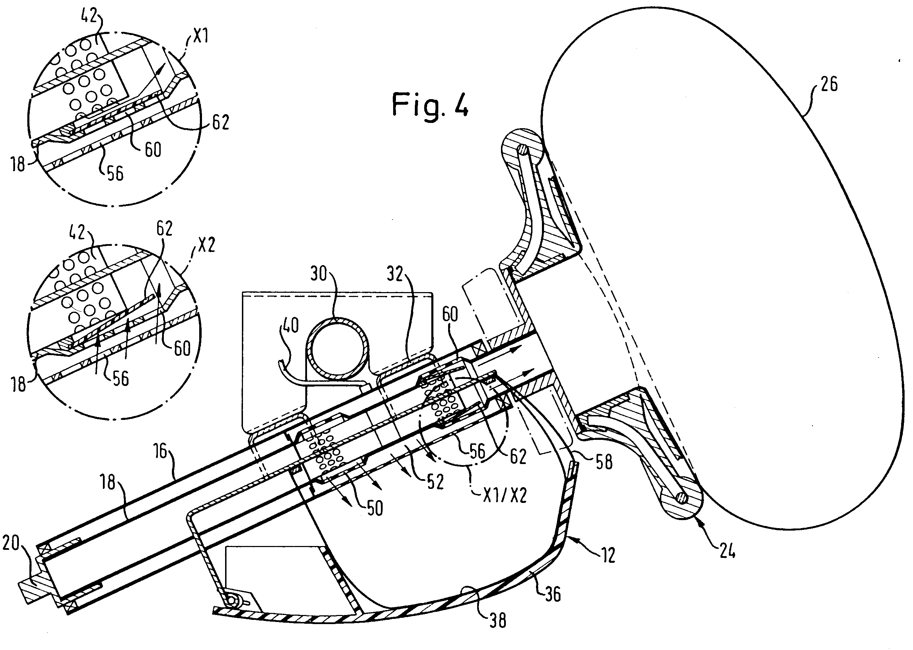

Bei der Ausführungsform nach Fig. 4 besteht im Unterschied zu der bisher beschriebenen Ausführung eine Strömungsverbindung zwischen den Innenräumen des Gaskissens 38 und des Gassacks 26, jedoch eine selektive Verbindung nur in Richtung vom Gaskissen 38 zum Gassack 26. Diese Strömungsverbindung kommt durch eine Vielzahl von Gasdurchtrittsöffnungen 60 in der aufgeweiteten Wandung der Lenkspindel 18, die das dem Lenkrad 24 zugewandte Ende des Gasgenerators 42 umgibt, zustande. Mit diesen Durchtrittsöffnungen 60 wirken Ventilklappenelemente 62 zusammen, die an der Innenseite der Lenkspindel 18 auslenkbar angeordnet sind und diese Durchtrittsöffnungen 60 freigeben, wenn Gas aus dem Gaskissen 38 in Richtung des Gassacks 26 strömt, diese Öffnungen jedoch bei umgekehrter Strömungsrichtung selbsttätig verschließen. Der Strömungswiderstand dieser Strömungsverbindung wird durch die Anzahl und Größe der Durchtrittsöffnungn 60 betimmt.

Die beiden möglichen Stellungen der Ventilklappen 62 sind in Fig. 4 gesondert und in vergrößertem Maßstab herausgezeichnet, wobei der geschlossene Zustand mit X1 und der geöffnete mit X2 bezeichnet ist.

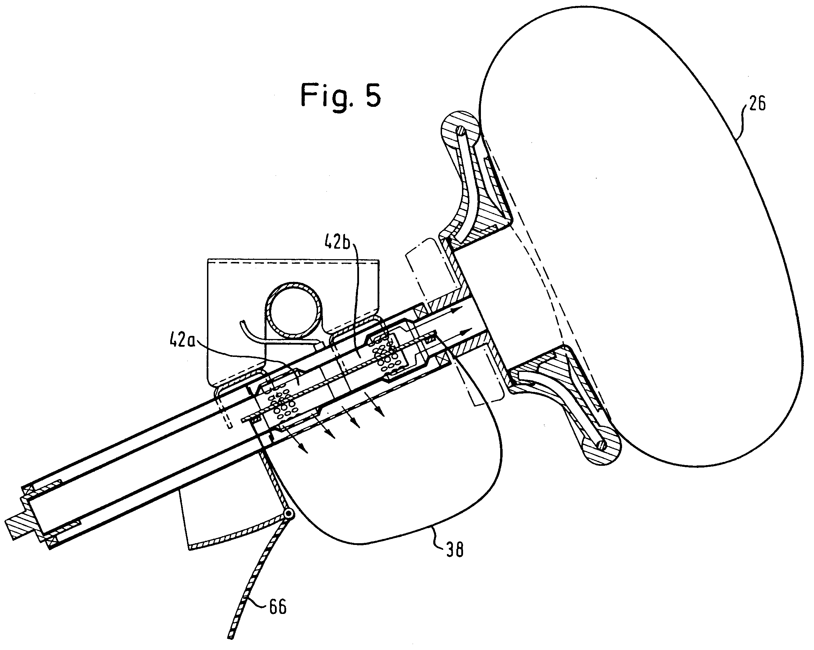

Bei der in Fig. 5 gezeigten Ausführungsvariante besteht der Gasgenerator aus zwei getrennt aktivierbaren Einheiten 42a und 42b. Die dem Gaskissen 38 zugeordnete Gasgeneratoreinheit 42a wird nur aktiviert, wenn der Sicherheitsgurt nicht angelegt ist. Der Zustand des Gurtsystems kann beispielsweise mittels eines Schalters am Gurtschloß abgefragt werden.

Ferner ist bei der in Fig. 5 gezeigten Ausführungsvariante das Gaskissen 38 lediglich mit einer aufklappbaren Sicht- und Schutzabdeckung 66 versehen, da eine kraftübertragende Prallplatte für die Knie-Rückhaltefunktion nicht unbedingt erforderlich ist.

## Patentansprüche

1. Insassen-Rückhaltesystem für die Fahrerseite in einem Fahrzeug, mit einem in das Lenkrad (24) integrierten Gassack (26) und einem Knie-Aufprallschutz (12), dadurch gekennzeichnet, daß das Lenkrad (24) an einer rohrförmigen Lenkspindel (18) befestigt ist, in deren Innerem ein Gasgenerator (42) angeordnet ist, daß der durch die Lenkspindel (18) gebildete Strömungskanal in den im Lenkrad (24) gefalteten Gassack (26) einmündet und daß der Knie-Aufprallschutz ein Gaskissen (38) umfaßt, das über eine Strömungsverbindung mit dem Inneren der Lenkspindel (18) aufblasbar ist.

2. Insassen-Rückhaltesystem nach Anspruch 1, dadurch gekennzeichnet, daß der Gassack (26) im Lenkrad (24) und das Gaskissen (38) des Knie-Aufprallschutzes (12) durch denselben Gasgenerator (42) aufblasbar sind.

3. Insassen-Rückhaltesystem nach Anspruch 1, dadurch gekennzeichnet, daß der Gassack (26) im Lenkrad (24) und das Gaskissen (38) des Knie-Aufprallschutzes (12) durch getrennte, selektiv aktivierbare, im Inneren der Lenkspindel (18) angeordnete Gasgeneratoren (42a, 42b) aufblasbar sind.

4. Insassen-Rückhaltesystem nach einem der vorstehenden Ansprüche, dadurch gekennzeichnet, daß zwischen dem Inneren des Gaskissens (38) und dem des Gassacks (26) eine selektive Strömungsverbindung in Richtung vom Gaskissen in den Gassack besteht.

5. Insassen-Rückhaltesystem nach einem der vorstehenden Ansprüche, dadurch gekennzeichnet, daß die Lenkspindel (18) in einem Lenksäulenrohr (16) aufgenommen und gelagert ist, in dessen Wandung Gasdurchtrittsöffnungen (56) angebracht sind, die in das an der Außenseite des Lenksäulenrohres zusammengefaltete Gaskissen (38) einmünden, und daß die Lenkspindel (18) ihrerseits mit Gasdurchtrittsöffnungen (50) in ihrer Mantelfläche versehen ist.

6. Insassen-Rückhaltesystem nach den vorstehenden Ansprüchen 4 und 5, dadurch gekennzeichnet, daß die selektive Strömungsverbindung durch an der Innenseite der Lenkspindel (18) angeordnete, mit den Gasdurchtrittsöffnungen (60) zusammenwirkende Ventilklappenelemente (62) steuerbar ist.

7. Insassen-Rückhaltesystem, nach einem der vorstehenden Ansprüche, dadurch gekennzeichnet, daß das Gaskissen (38) durch eine auslenkbar am Fahrzeugaufbau gelagerte Prallplatte (36) abgedeckt ist.

## Claims

1. An occupant restraining system for the driver's side of a vehicle, comprising a gas bag (26) integrated in the steering wheel (24) and a knee impact protector (12), characterized in that the steering wheel (24) is secured to a tubular steering shaft (18), in whose interior a gas generator (42) is arranged, in that the flow path constituted by the steering shaft (18) opens into the gas bag (26) folded up in the steering wheel (24), and in that the knee protector comprises a gas cushion (38) able to be inflated via a flow path providing a connection with the interior of the steering shaft section (18).

2. The occupant restraining system as claimed in claim 1, characterized in that the gas bag (26) in the steering wheel (24) and the gas cushion (38) of the knee protector (12) are adapted to be inflated by the same gas generator (42).

3. The occupant restraining system as claimed in claim 1, characterized in that the gas bag (26) in the steering wheel (24) and the gas cushion (38) of the knee protector (12) are adapted to be inflated by separate, selectively operatable gas generators (42a, 42b) arranged in the interior of the steering shaft section (18).

4. The occupant restraining system as claimed in any one of the preceding claims, characterized in that between the interior of the gas cushion (38) and that of the gas bag (26) a selective flow path is provided leading from the gas cushion into the gas bag.

5. The occupant restraining system as claimed in any one of the preceding claims, characterized in that the steering shaft (18) is received and supported in a steering column tube (16), in whose wall gas passage openings (56) are provided, which open into the gas cushion (38) folded up on the outer side of the steering column tube, and in that the steering shaft section (18) for its part is furnished with gas passage openings (50) in an outer lateral surface thereof.

6. The occupant restraining system as claimed in any one of the preceding claims 4 and 5, characterized in that the selective flow path is able to be controlled by flap elements (62) arranged on the inner side of the steering shaft section (18) and cooperating with the gas passage openings (60).

7. The occupant restraining system as claimed in any one of the preceding claims, characterized in that the gas cushion (38) is covered over by an impact pad (36) mounted in a deflectable fashion on the body of the vehicle.

## Revendications

1. Système de retenue de passager pour le côté du conducteur dans un véhicule, avec un sac à gaz (26), intégré dans le volant de direction (24), et avec une protection des genoux contre les chocs (12), caractérisé en ce que le volant de direction (24) est fixé sur un arbre de direction (18) en forme de tube, à l'intérieur duquel est disposé un générateur de gaz (42), en ce que le canal d'écoulement, formé par l'arbre de direction (18), débouche dans le sac à gaz (26), replié dans le volant de direction (24), et en ce que la protection des genoux contre les chocs comprend un coussin à gaz (38), qui peut être gonflé au moyen d'une liaison d'écoulement avec l'intérieur de l'arbre de direction (18).

2. Système de retenue de passager selon la revendication 1, caractérisé en ce que le sac à gaz (26) dans le volant de direction (24) et le coussin à gaz (38) de protection des genoux contre les chocs (12) peuvent être gonflés par le même générateur de gaz (42).

3. Système de retenue de passager selon la revendication 1, caractérisé en ce que le sac à gaz (26) dans le volant de direction (24) et le coussin à gaz (38) de protection des genoux contre les chocs (12) peuvent être gonflés par des générateurs de gaz séparés (42a, 42b), qui peuvent être activés de façon sélective, et qui sont disposés à l'intérieur de l'arbre de direction (18).

4. Système de retenue de passager selon l'une des revendications précédentes, caractérisé en ce qu'entre l'intérieur du coussin à gaz (38) et celui du sac à gaz (26) il y a une liaison d'écoulement sélective en direction du coussin à gaz dans le sac à gaz .

5. Système de retenue de passager selon l'une des revendications précédentes, caractérisé en ce que l'arbre de direction (18) est logé et est monté dans une colonne tubulaire de direction (16), dans la paroi de laquelle sont disposés des orifices de passage du gaz (56), qui débouchent dans le coussin à gaz (38) replié sur le côté extérieur de la colonne tubulaire de direction, et en ce que l'arbre de direction (18) est pourvu de son côté d'orifices de passage du gaz (50) dans sa surface enveloppe.

6. Système de retenue de passager selon les revendications précédentes 4 et 5, caractérisé en ce que la liaison d'écoulement sélective peut être commandée par des éléments de clapets de soupape (62) qui coopèrent avec les orifices de passage du gaz (60) disposés sur le côté intérieur de l'arbre de direction (18).

7. Système de retenue de passager selon l'une des revendications précédentes, caractérisé en ce que le coussin à gaz (38) est recouvert par une plaque d'impact (36) montée de façon déployable sur la carrosserie du véhicule.
